# EUROPÄISCHE PATENTANMELDUNG

(11) **EP 1 591 014 A2**
(43) Veröffentlichungstag der Anmeldung: **02.11.2005**
(21) Anmeldenummer: 05005926.0
(22) Anmeldetag: 18.03.2005
(51) Int. Cl.: A22B 5/20

(54) **Schneidwerkzeug zum Aufschneiden von Schlachttieren**

(30) Priorität: 28.04.2004 DE 102004022346
(71) Anmelder: SCHMID & WEZEL GmbH & Co., 75429 Maulbronn (DE)
(72) Erfinder: Lay, Norbert, 71149 Bondorf (DE)
(74) Vertreter: Dreiss, Fuhlendorf, Steimle & Becker

(57) **Zusammenfassung**

Beschrieben wird ein Schneidwerkzeug zum Aufschneiden eines Schlachttieres (3) mit einem kreisförmigen von einer Antriebseinheit (5) rotierend angetriebenen Schneidmesser (7) sowie einem in seiner Stellung gegenüber dem Schneidmesser veränderbaren Andrückkörper (10), und einer das Schneidmesser zumindest teilweise überdeckenden verstellbaren Schutzhaube (9). Der Antrieb des Schneidmessers (7) wird durch eine Welle (35) und Antriebsmittel (38, 39, 45) gebildet, die in einem an der Antriebseinheit (5) vorgesehenen Ausleger (6) angeordnet sind. Die Schutzhaube (9) ist an einer auf dem Ausleger (6) angeordneten Führungsplatte (15) um die Drehachse (18) des Schneidmessers (7) mittels einer an ihr angreifenden Kolbenstange (31) einer an der Antriebseinheit (5) angebrachten Kolben-/Zylinderanordnung (8) drehbar. Die den Antriebsmitteln (38, 39, 40, 45) zugewandte Seitenplatte (11) der Schutzhaube (9) weist einen Ring (42) auf, der gegenüber einem am Gehäuse (45) der Antriebsmittel angeordneten Ring (46), drehbar ist.

## Beschreibung

Die Erfindung betrifft ein Schneidwerkzeug zum Aufschneiden von Schlachttieren nach dem Oberbegriff des Anspruches 1.

Bei einer bekannten Vorrichtung dieser Art (vgl. EP 0 594 791 B1) ist der Schutz des Antriebs des Schneidmessers vor Verschmutzung durch beim Schneidvorgang entstehende tierische Abfälle nicht ausreichend gewährleistet.

Die der Erfindung zugrunde liegende Aufgabe besteht darin, den Schutz des Antriebs des kreisförmig ausgebildeten Schneidwerkzeugs vor Verschmutzung zu gewährleisten und das Andrücken der Haut des Schlachttieres, in die das Schneidwerkzeug einschneidet, an das Schneidwerkzeug bei möglichst einfachem Aufbau zu verbessern.

Beim Stand der Technik tritt noch folgendes Problem auf. Bei der Führung des Schnitts wird das Schlachttier, um es in seiner Lage relativ zum Werkzeug zu stabilisieren, von dem Werkzeug aus der Vertikalen ausgelenkt. Dabei muss die Lagerung des Werkzeugs erhebliche Kräfte aufnehmen, insbesondere deshalb, weil bis zu 650 Schlachttiere pro Stunde auf diese Weise geöffnet werden. Aufgabe ist es somit auch, die Anordnung so zu treffen, das zumindest ein Teil der Kräfte anderweitig aufgenommen werden.

Die Lösung dieser Aufgabe erfolgt mit den im Anspruch 1 angegebenen Mitteln. Vorteilhafte Weiterbildungen der Erfindung sind in den Unteransprüchen definiert.

Ausführungsbeispiele der Erfindung und ihrer vorteilhaften Weiterbildungen werden im Folgenden anhand der beigefügten Zeichnungen beschrieben. Es stellen dar:
- Figur 1: eine schematische Darstellung eines Ausführungsbeispiels an einem Schlachttier;
- Figur 2: das Ausführungsbeispiel in Stellung I nach Figur 1;
- Figur 3: das Ausführungsbeispiel in Stellung II nach Figur 1;
- Figur 4: eine Seitenansicht (Rückansicht, wenn bezogen auf Fig. 1 - 3) des Ausführungsbeispiels;
- Figur 5: eine Ansicht in Richtung der Pfeile Linie V-V in Figur 4;
- Figur 6: eine Ansicht in Richtung der Pfeile VI-VI in Figur 5;
- Figur 7: eine Ansicht in Richtung der Pfeile VII-VII in Figur 4;
- Figur 8: ein Ansicht in Richtung der Pfeile VIII-VIII in Figur 4;
- Figur 9: eine Ansicht in Richtung der Pfeile IX-IX in Figur 4;
- Figur 10: eine Ansicht in Richtung der.Pfeile X-X in Figur 4;
- Figur 11: eine Ansicht in Richtung der Pfeile XI-XI in Figur 4;
- Figur 12: eine Ansicht in Richtung der Pfeile XII-XII in Figur 6;
- Figur 13: eine Ansicht in Richtung der Pfeile XIII-XIII in Figur 4;
- Figur 14: eine Ansicht entlang der Pfeile XIV-XIV in Figur 6;
- 15 und 16: ein weiteres Ausführungsbeispiel in zwei unterschiedlichen perspektivischen Ansichten.

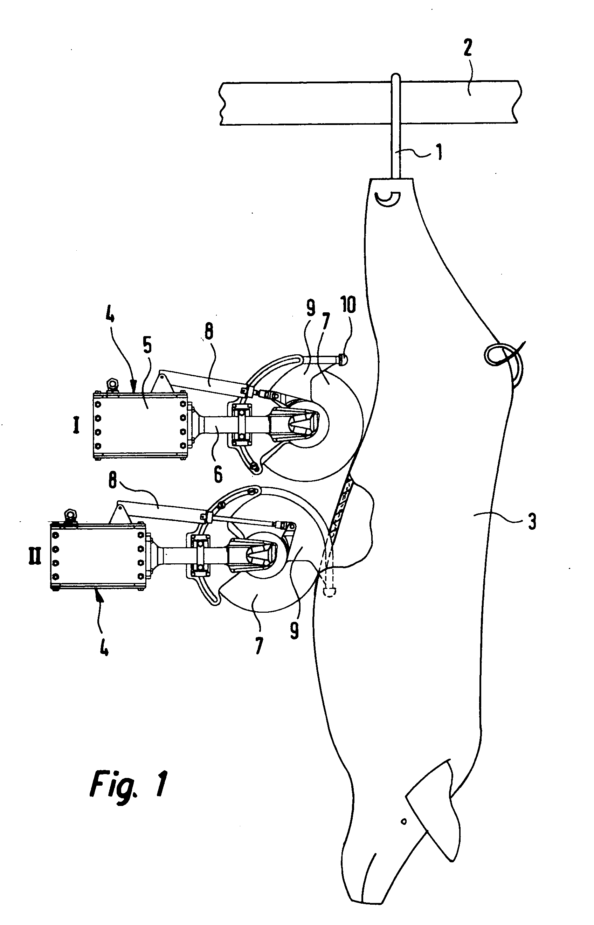

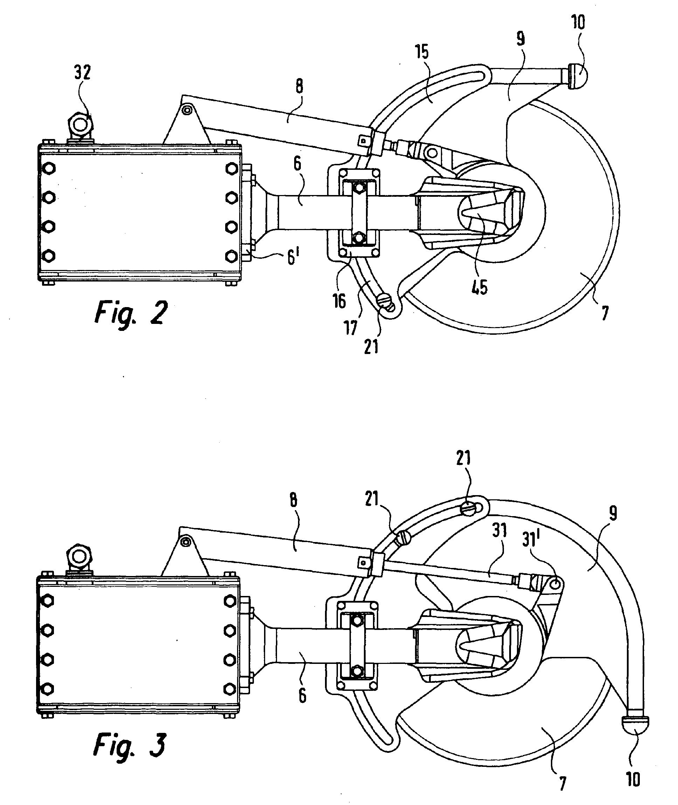

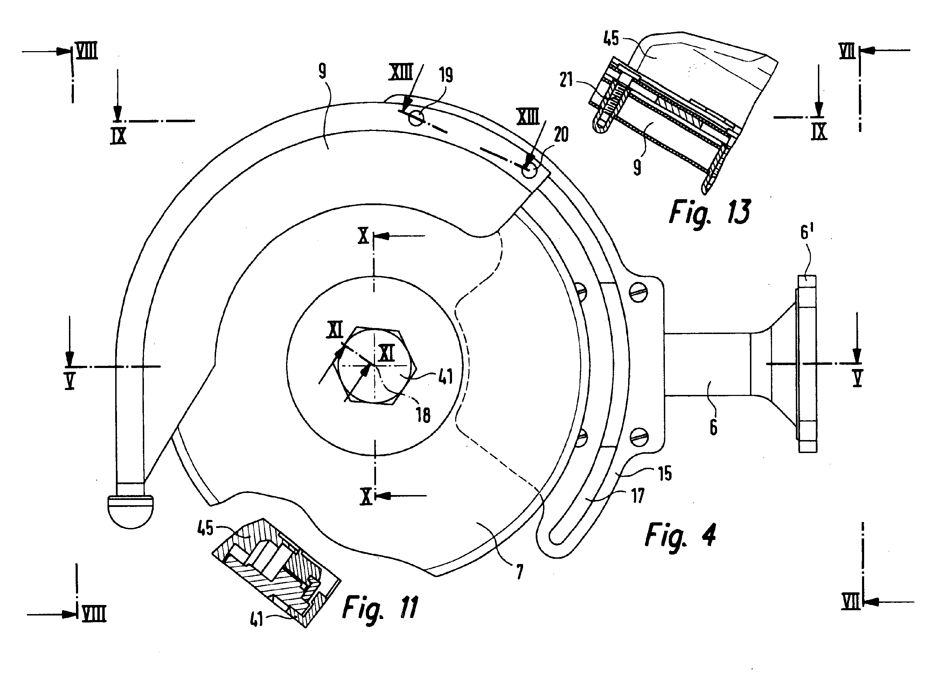

Figur 1 zeigt an den Hinterbeinen mittels eines Hakens 1 an einer Transporteinrichtung 2 aufgehängtes Schlachttier 3, zum Beispiel ein Schwein. In den Stellungen I und II ist ein allgemein mit 4 bezeichnetes Schneidwerkzeug angesetzt, das eine Antriebseinheit 5, u. a. enthaltend einen Elektromotor, einen Ausleger 6, ein mittels des genannten Elektromotors angetriebenes Schneidmesser 7 (zum Beispiel eine Säge), sowie eine mittels einer Kolben-/Zylinderanordnung 8 zwischen den zwei Endstellungen I und II verstellbare Schutzhaube 9 aufweist. Das Schneidwerkzeug ist zum Anbau an einen üblichen mehrachsigen Roboter ausgestaltet, an den die Antriebseinheit 5 angeschlossen und angeschraubt werden kann. Der Ausleger 6 ist mittels Flansch 6' an der Antriebseinheit 5 befestigt. In Stellung I ist die Schutzhaube 9 zurückgezogen, so dass das Schneidmesser 7 in das Schlachttier 3 einschneiden kann, ohne dass der an der Schutzhaube 9 angebrachte pilzartige Andrückkörper 10 dies behindert, während - nach erfolgtem Einschnitt - zur Weiterführung des Schneidwerkzeugs nach unten die Schutzhaube 9 mittels der Kolben-/Zylinderanordnung 8 in Stellung II gebracht ist, in der der Andrückkörper 10 von innen an der Bauchdecke des Schlachttieres 3 anliegt und damit das Schneidmesser 7 in der Lage zum Schlachttier 3 stabilisiert und führt. Figur 2 zeigt die Schutzhaube 9 in zurückgezogener Position I gemäß Figur 1; Figur 3 zeigt die Schutzhaube 9 in voll ausgefahrener Position II gemäß Figur 1, bei der sich der Andrückkörper 10 vertikal nach unten erstreckt.

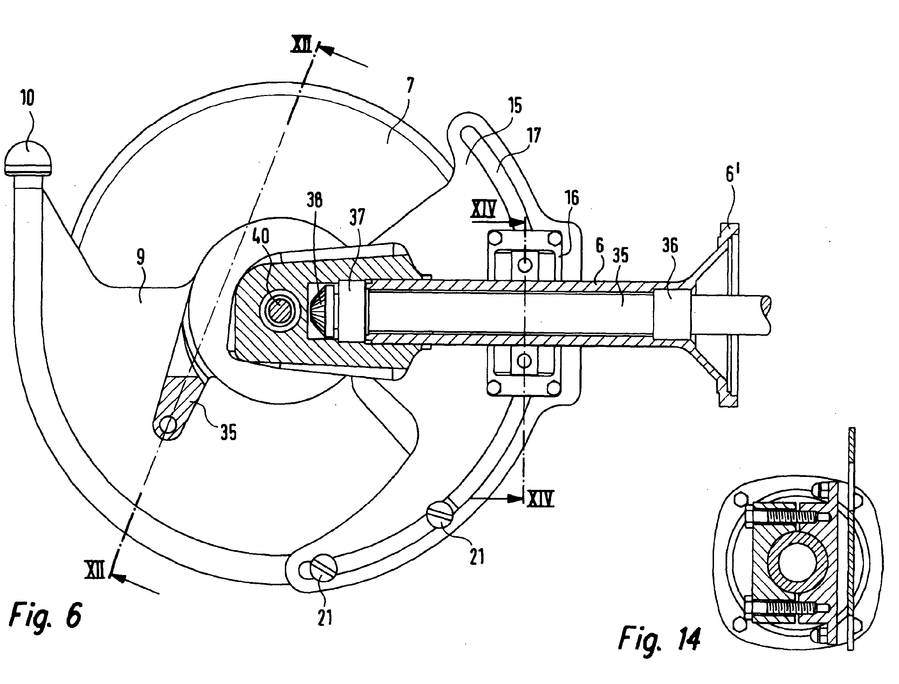

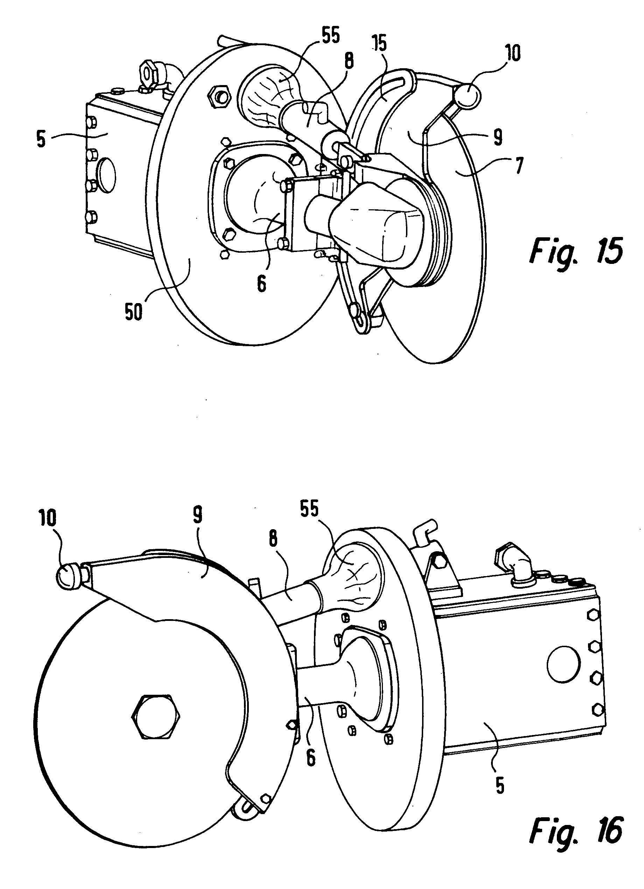

Insbesondere aus den Figuren 4 - 6 ist zu ersehen, dass auf einer Seite, die der nicht sichtbaren Rückseite in Figur 2 und 3 entspricht, an den Ausleger 6 eine Führungsplatte 15 angeschraubt ist, und zwar mit Hilfe eines Befestigungsblocks 16 (vgl. auch Figur 14). Die Führungsplatte 15 weist eine als Einschnitt ausgebildete Führungsbahn 17 auf, die konzentrisch zur Drehachse 18 eines kreisförmigen drehangetriebenen Schneidwerkzeuges 7 verläuft, jedoch einen größeren Durchmesser als dieses hat. In dieser Führungsbahn sind Führungsstifte 19, 20 geführt, die mit der Schutzhaube 9 mittels Schrauben 21 verschraubt sind. Auf diese Weise ist also die Schutzhaube 9 in der Führungsbahn 17 konzentrisch zur Drehachse 18 des kreisförmigen Schneidmessers 7 gegenüber der am Ausleger 6 fest angebrachten Führungsplatte 15 verdrehbar. Dabei entspricht die in den Figuren 4 und 6 gezeigte Stellung der Stellung II in Figur 1. Die Führungsplatte 15 nimmt über die Stifte 19, 20 einen Teil der Kräfte auf, die beim Schneiden auf den Führungskörper 10 einwirken und entlastet damit die Lagerung.

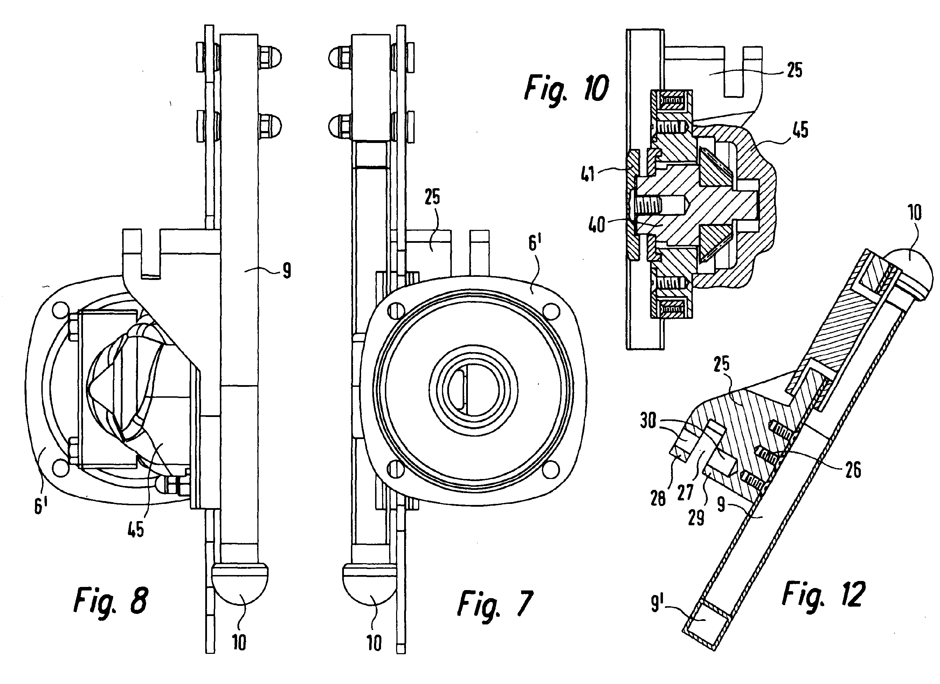

Wie aus den Figuren 4, 5, 6 und 12 zu ersehen, wird die Schutzhaube 9 durch Seitenplatten 11, 13 und entlang ihres Umfangs durch ein quadratisches Profil 9 gebildet. Auf der Schutzhaube 9 befindet sich, mit dieser mittels Schrauben 26 verschraubt, ein Stellklotz 25, der einen Einschnitt 27 aufweist, dessen Wangen 28 und 29 von miteinander fluchtenden Bohrungen 30 durchsetzt sind. Diese Anordnung dient zur gelenkigen Befestigung eines Endes einer Kolbenstange 31 mittels Stiften 30' (vgl. Figur 3). Die Kolbenstange 31 ist Teil der Kolben-/Zylinderanordnung 8, die zur Verstellung der Schutzhaube 9 dient. Die Kolben-/Zylinderanordnung 8 wird über in der Antriebseinheit 5 vorgesehene Ventile (nicht gezeigt) und einen Druckluftanschluss 32 mit Druckluft beaufschlagt, um, je nach Ventilstellung, die Schutzhaube 9 entweder in die Stellung I nach Figur 2 oder in die Stellung II nach Figur 3 zu bewegen.

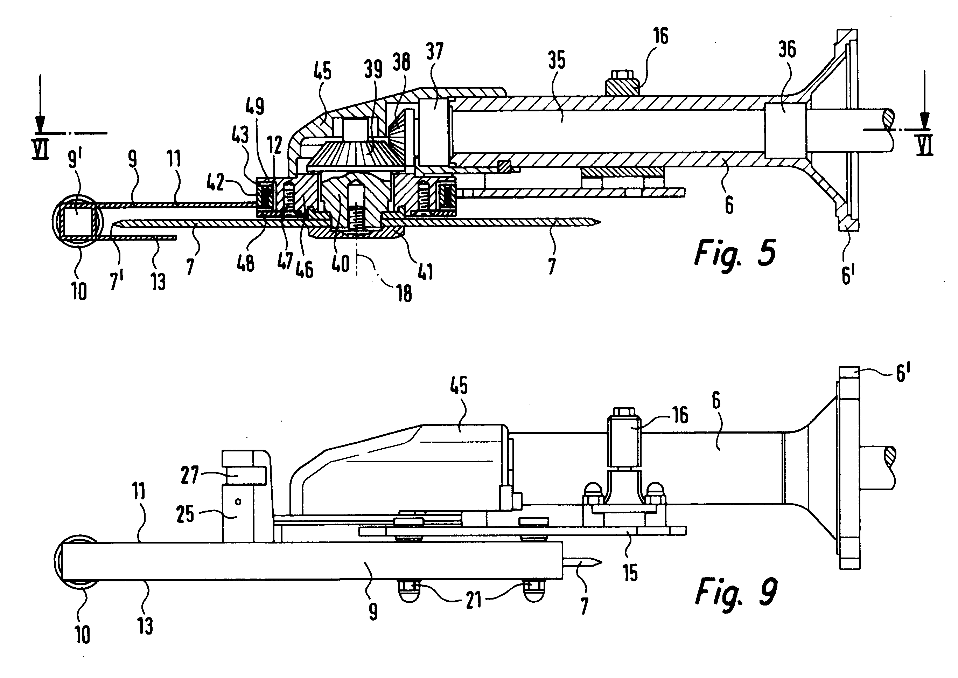

Wie aus den Figuren 5 und 9 zu ersehen, ist der Ausleger 6 zugleich Gehäuse einer Welle 35, die in dem Ausleger 6 mittels Lager 36, 37 gelagert ist. Die Welle 35 wird von dem in der Antriebseinheit 5 vorgesehenen Elektromotor (nicht gezeigt) angetrieben. Ein am Ende der Welle vorgesehenes Ritzel 38 greift in ein Ritzel 39 ein, das auf einem Antriebszapfen 40 sitzt. Auf dem Antriebszapfen 40 ist mittels Schraube 41 das Schneidmesser 7 zentrisch eingespannt. Der Ausleger 6 geht in ein Gehäuse 45 über, in dem die vorgenannten Bauteile angeordnet sind.

Aus Figur 5 ist zu sehen, dass das Gehäuse 45 einen Ring 46 trägt, der den Antriebszapfen 40 mit geringem radialen Abstand umgibt und auf dem mittels Schrauben 47 eine ringförmige Abdeckplatte 48 aufgeschraubt ist. Zwischen der Abdeckplatte 48 und einem scheibenförmigen Fortsatz 49 des Ringes 46 befindet sich drehbar gegenüber diesen Teilen ein weiterer Ring 42, der mit der dem Ausleger 6 zugewandten Seitenplatte 11 der Schutzhaube 9 mittels Schrauben 12 verschraubt ist. Der mit der Schutzhaube 9 verschraubte Ring 42 dreht sich also mit der Schutzhaube 9 in der zwischen Fortsatz 49 und Abdeckplatte 48 gebildeten Nut 43. Die andere, dem Ausleger 6 abgewandte Seitenplatte 13 erstreckt sich so weit zur Drehachse 18 hin, dass sie den äußeren Umfang 7' des Schneidmessers 7 übergreift.

Auf diese Weise ist sichergestellt, dass die Antriebselemente, mit denen das Schneidmesser 7 gedreht wird, insbesondere Antriebszapfen 40 und seine Lagerung im Gehäuse 45 gegen Verschmutzung durch beim Schneiden anfallende oder frei werdende Teile des Schlachttieres (Blut, Fleischstücke, Innereien) nicht verschmutzt wird. Der Aufbau ist also so weit wie möglich geschlossen. Gleichzeitig ist damit auch eine einfache Reinigungsmöglichkeit der Vorrichtung gewährleistet.

Die Figuren 15 und 16 zeigen ein weiteres Ausführungsbeispiel, das dem Ausführungsbeispiel nach Figuren 1 - 14 grundsätzlich gleicht, jedoch mit der zusätzlichen Maßnahme, dass zwischen Antriebseinheit 5 und den das Schneidmesser 7 tragenden Teilen eine Schmutzabweiseplatte 50 angeordnet ist, um die Antriebseinheit vor Verschmutzung zu schützen. Diese ist mit zwei Öffnungen versehen. Die eine Öffnung ist in den Figuren 15, 16 durch den Flansch 6' des Auslegers 6 verdeckt. Durch diese Öffnung erstreckt sich die Welle 35 hindurch. Durch die Öffnung 51 erstreckt sich die Kolben/Zylinder-Anordnung 8 hindurch. An dieser ist ein Balg 55 vorgesehen, um zu verhindern, dass durch die Öffnung 51 Schmutz hindurchtritt.

Durch die konzentrische Anordnung der Schutzhaube 9 gegenüber dem Schneidmesser 7 ist sichergestellt, dass der Andrückkörper 10 die zwischen ihm und dem äußeren Umfang des Schneidmessers 7 liegende Haut des Schlachttieres 3 in Stellung II nach Figur 1 stets in eine besonders günstige Lage zum Schneidwerkzeug 7 zieht.

Die Schutzhaube 9 erstreckt sich über einen Sektor von mehr als 90°, im Ausführungsbeispiel ca. 135°, um die beschriebene Schmutzabweisung zu gewährleisten.

## Patentansprüche

1. Schneidwerkzeug zum Aufschneiden eines Schlachttieres (3) mit einem kreisförmigen von einer Antriebseinheit (5) rotierend angetriebenen Schneidmesser (7) sowie einem in seiner Stellung gegenüber dem Schneidmesser veränderbaren Andrückkörper (10), und einer das Schneidmesser zumindest teilweise überdeckenden verstellbaren Schutzhaube (9), **dadurch gekennzeichnet, dass** der Antrieb des Schneidmessers (7) durch eine Welle (35) und Antriebsmittel (38, 39, 40) gebildet wird, die in einem an der Antriebseinheit (5) vorgesehenen Ausleger (6) angeordnet sind, und dass die Schutzhaube (9) an einer auf dem Ausleger (6) angeordneten Führungsplatte (15) um die Drehachse (18) des Schneidmessers (7) mittels einer an ihr angreifenden Kolbenstange (31) einer an der Antriebseinheit (5) angebrachten Kolben-/Zylinderanordnung (8) drehbar ist, und dass die den Antriebsmitteln (38, 39, 40) zugewandte Seitenplatte (11) der Schutzhaube (9) einen ersten Ring (42) aufweist, der gegenüber einem zweiten Ring (46), der an einem die Antriebsmittel (38, 39, 40) aufnehmenden Gehäuse (45) angeordnet ist, drehbar ist.

2. Schneidwerkzeug nach Anspruch 1, **dadurch gekennzeichnet, dass** der erste Ring (42) in einer Nut (43) läuft, die an dem die Antriebsmittel (38, 39, 40) umschließenden zweiten Ring (46) gebildet ist.

3. Schneidwerkzeug nach Anspruch 1 oder 2, **dadurch gekennzeichnet, dass** die Schutzhaube (9) zumindest mit ihrer den Antriebsmitteln (38, 39, 40) zugewandten Seitenplatte (11) mindestens einen Sektor von 90 - 150° des Schneidmessers (7), vorzugsweise ca. 135°, abdeckt.

4. Vorrichtung nach einem der Ansprüche 1 - 3, **dadurch gekennzeichnet, dass** die Schutzhaube (9) in einer Führungsbahn (17) konzentrisch zur Drehachse (18) des Schneidwerkzeugs (17) gelagert ist, die in der Führungsplatte (15) vorgesehen ist.

5. Vorrichtung nach einem der Ansprüche 1 - 4, **dadurch gekennzeichnet, dass** der Radius der Führungsbahn (17) größer als der des Schneidmessers (7) ist.

6. Vorrichtung nach einem der Ansprüche 1 - 5, **dadurch gekennzeichnet, dass** der äußere Umfang der Schutzhaube (9) durch ein quadratisches Profil (9') gebildet wird.

7. Vorrichtung nach einem der Ansprüche 1 - 6, **dadurch gekennzeichnet, dass** der Ausleger (6) und die Kolben-/Zylinderanordnung (8) zur Verstellung der Schutzhaube (9) sich durch eine Schmutzabweiseplatte (50) hindurcherstrecken und auf der der Schutzhaube (9) abgewandten Seite mit der Antriebseinheit (5) verbunden sind.
